# EUROPÄISCHE PATENTSCHRIFT

(11) **EP 0 534 989 B1**
(45) Veröffentlichungstag und Bekanntmachung des Hinweises auf die Patenterteilung: **03.08.1994**
(21) Anmeldenummer: 91909013.4
(22) Anmeldetag: 15.05.1991
(51) Int. Cl.: F16D 65/56, F16D 65/16, F16D 55/226

(54) **SCHEIBENBREMSE FÜR FAHRZEUGE**
DISC BRAKE FOR VEHICLES
FREIN A DISQUE POUR VEHICULES

(30) Priorität: 27.06.1990 DE 4020485
(43) Veröffentlichungstag der Anmeldung: 07.04.1993
(73) Patentinhaber: KNORR-BREMSE Systeme für Nutzfahrzeuge GmbH, 80809 München (DE)
(72) Erfinder: IRASCHKO, Johann, D-8069 Schweitenkirchen (DE)
(74) Vertreter: KUHNEN, WACKER & PARTNER
(86) Internationale Anmeldenummer: DE9100401
(87) Internationale Veröffentlichungsnummer: WO9200466

(56) Entgegenhaltungen:
- DE-A- 1 951 312
- DE-A- 2 400 470
- DE-A- 2 507 012
- DE-A- 3 716 202

## Beschreibung

Die Erfindung betrifft eine Scheibenbremse für Fahrzeuge, insbesondere Straßenfahrzeuge, mit einem eine Bremsscheibe übergreifenden Bremssattel, der einseitig eine Zuspannvorrichtung mit einem um eine zur Ebene der Bremsscheibe parallel verlaufende Drehachse schwenkbaren Nockenhebel zum Bewegen einer ebenfalls zur genannten Ebene parallel verlaufenden Traverse in zur genannten Ebene senkrechter Richtung aufweist, wobei jedes Ende der Traverse mit einer Stellspindel verschraubt ist, gegen deren bremsscheibenseitige Enden sich ein relativ zum Bremssattel quer zur Bremsscheibe verschieblicher Bremsbelag abstützt, wobei die beiden Stellspindeln durch eine gegebenenfalls als Zahnriemen ausgebildete Gleichlaufeinrichtung drehfest miteinder gekoppelt sind und wobei zum Justieren des Lösespiels ein vom Schwenkhub des Nockenhebels betätigbarer Drehantrieb für die Stellspindeln vorgesehen ist, welcher eine in Drehrichtung zum Verkleinern des Lösespiels sperrende Einwegdrehkupplung beinhaltet.

Eine mit Ausnahme der Einwegdrehkupplung den vorstehenden Merkmalen entsprechende Scheibenbremse ist aus der DE-A-37 16 202 bekannt. Bei dieser bekannten Scheibenbremse erfolgt die Spielnachstellung dadurch, daß die Schwenkbewegungen des Nockenhebels in eine Bewegng des Zahnriemens umgesetzt wird, was durch eine am Nockenhebel gehalterte, mit dem Zahnriemen zusammenwirkende, klinkenartige Formfeder erfolgt. Bei dieser bekannten Ausführung muß also der Zahnriemen bzw. die Gleichlaufeinrichtung die Kräfte für die gleichzeitige Nachstellung beider Stellspindeln übertragen, wodurch der Zahnriemen bzw. die Gleichlaufeinrichtung hoch beansprucht werden kann.

Mit der nicht veröffentlichten, deutschen Patentanmeldung P 40 18 227 ist bereits eine vollständig den eingangs genannten Merkmalen entsprechende Scheibenbremse vorgeschlagen worden, bei welcher zur Entlastung der Gleichlaufeinrichtung eine der beiden Stellspindeln unmittelbar mit dem vom Nockenhebel über einen Schwenkantrieb antreibbaren Drehantrieb gekoppelt ist; nur die andere Stellspindel wird hierbei über die Gleichlaufeinrichtung angetrieben.

Ein wesentliches Bauteil von pneumatischen Scheibenbremsen ist der Verschleißnachsteller. Da der Zuspannweg aufgrund der hohen Zuspannkräfte, welche eine große, mechanische Übersetzung erfordern, relativ begrenzt ist, es stehen oftmals nur ca. 5 mm Zuspannweg zur Verfügung, der Belaggesamtverschleiß aber wesentlich größer ist, im Bereich von ca. 40 mm liegen kann, muß mittels automatischer Verschleißnachstellung ein möglichst konstantes Lösespiel gehalten werden. Daraus ergibt sich, daß der automatische Verschleißnachsteller ein wichtiges Sicherheitsbauteil ist:

Wenn nämlich der Verschleißnachsteller nicht ornungsgemäß arbeitet, wird das Lösespiel ständig größer und das hat zur Folge, daß alsbald die volle Zuspannkraft und damit das volle Bremsmoment nicht mehr erreicht werden können, da der Zuspannweg hierzu nicht mehr ausreicht. Falls also bei einer Scheibenbremse mit nur einem Verschleißnachsteller oder diesem zugehörenden Einzelorganen, wie es bei den eingangs als bekannt bzw. bereits vorgeschlagen erwähnten Scheibenbremsen der Fall ist, ein Ausfall auftritt, droht ein alsbaldiger Ausfall der gesamten Scheibenbremse.

Es ist Aufgabe der Erfindung, eine Scheibenbremse der eingangs genannten Art derart auszugestalten, daß die Funktionssicherheit wesentlich gesteigert, die Gefahr eines Ausfalles der Scheibenbremse wesentlich gemindert wird.

Diese Aufgabe wird nach der Erfindung dadurch gelöst, daß für jede der beiden Stellspindeln jeweils ein eigener, ihr zugeordneter und vom Nockenhebel über einen eigenen Schwenkantrieb antreibbarer Drehantrieb vorgesehen ist. Hierdurch ergibt sich in Verbindung mit der Gleichlaufeinrichtung eine Redundanzwirkung der sich jeweils aus einem Drehantrieb und einer Stellspindel zusammensetzenden Verschleißnachsteller, derart, daß bei Ausfall eines Drehantriebes der jeweils andere, intakte Drehantrieb die Nachstellfunktion für beide Stellspindeln bewirkt bzw. bei Ausfall der Gleichlaufeinrichtung die beiden Verschleißnachsteller immer noch über die vermittels der Traverse gleichartig betätigten Drehantriebe im wesentlichen gleichmäßig betätigt werden und so eine in Umfangsrichtung der Bremsscheibe gesehen im wesentlichen gleichmäßige Nachstellung des Bremsbelages sicherstellen.

Nach der weiteren Erfindung vorteilhafte Ausbildungsmöglichkeiten einer derartigen Scheibenbremse sind den Merkmalen der Unteransprüche entnehmbar. Hierbei ist besonders darauf hinzuweisen, daß, wird ein Drehantrieb während des Einbrems- und der andere Drehantrieb während des Lösevorganges betätigt, die Nachstellgeschwindigkeit, bezogen auf die Anzahl der Bremsbetätigungen, verdoppelt wird. Werden dagegen beide Drehantriebe nur während des Einbrems- oder des Lösevorganges betätigt, wird das von den Drehantrieben ausübbare Nachstellmoment verdoppelt; die Nachstellgeschwindigkeit bleibt hierbei, bezogen auf eine Scheibenbremse mit nur einem Verschleißnachsteller, unverändert.

In den Zeichnungen ist ein bevorzugtes Ausführungsbeispiel für eine nach der Erfindung ausgebildete Scheibenbremse in den hier wesentlichen Teilen dargestellt, und zwar zeigt
- Fig.1: die Zuspannvorrichtung in einem aufgeschnittenen Bremssattel,
- Fig.2: einen einzelnen Drehantrieb, wie er mit der erwähnten, älteren Patentanmeldung P 40 18 227 bereits vorgeschlagen wurde, in vergrößertem Maßstab, und
- Fig.3: einen Ausschnitt aus einer Zuspannvorrichtung entsprechend Fig.1, jedoch mit geänderter Funktionsweise, im aufgeschnittenen Zustand und in vergrößertem Maßstab.

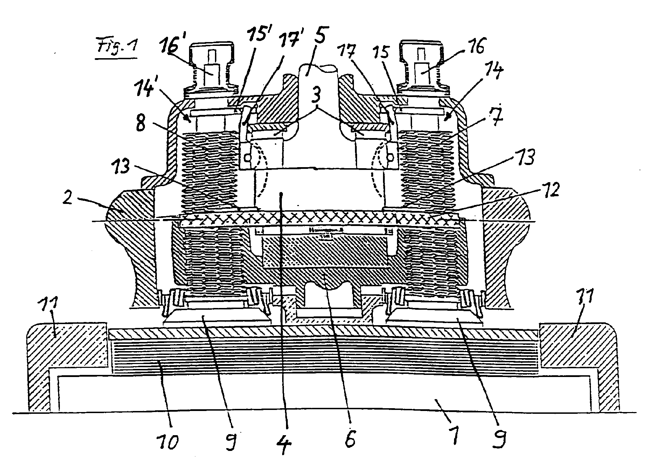

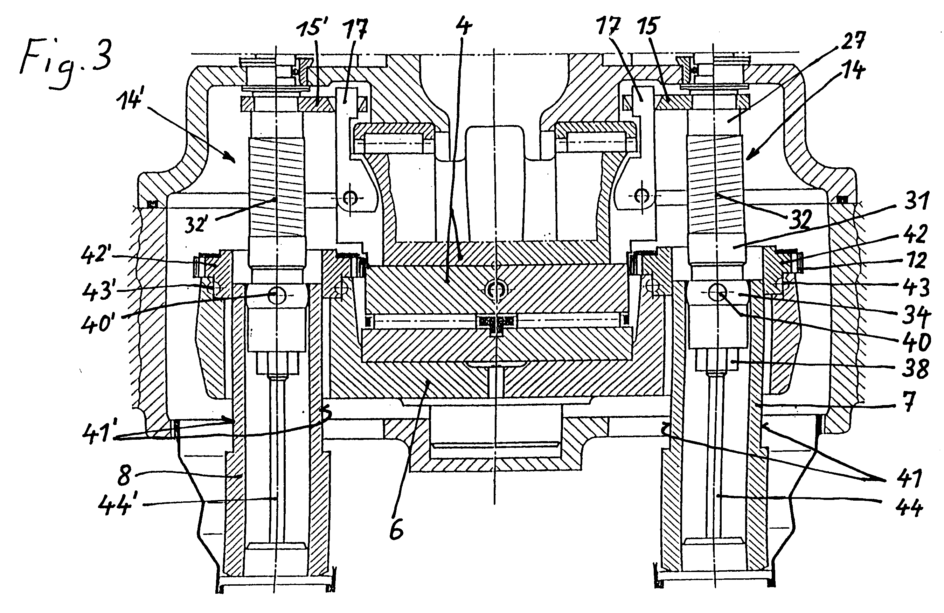

Die Fig.1 zeigt eine Bremsscheibe 1, welche von einem Bremssattel 2 übergriffen ist, von welchem nur ein zu einer Seite der Bremsscheibe 1 befindlicher, die Zuspannvorrichtung aufnehmender Teil dargestellt ist; im übrigen, nicht dargestellten Teil ist der Bremssattel 2 in üblicher Weise ausgebildet und gelagert. Im Bremssattel 2 ist vermittels annähernd halbschalenförmiger Wälzlagerungen 3 ein Nockenhebel 4 um eine zur Ebene der Bremsscheibe 1 parallel verlaufende Drehachse schwenkbar gelagert, der Antrieb des Nockenhebels 4 erfolgt über einen Hebel 5, dessen Ende mit dem Kolben eines vorzugsweise am Bremssattel 2 gehalterten Bremszylinders oder aber auch mit einem mechanischen Bremsgestänge gekoppelt sein kann. Andererseits ist der Nockenhebel 4 vermittels seines Nockens mit einer Traverse 6 gekoppelt, welche sich innerhalb des Bremssattels 2 parallel zur Ebene der Bremsscheibe 1 erstreckt und senkrecht zu dieser Ebene beweglich ist. Die beiden Enden der Traverse 6 sind mit je einer Stellspindel 7 bzw. 8 justierbar verschraubt, die beiden Stellspindeln 7 und 8 erstrecken sich innerhalb des Bremssattels 2 senkrecht zur Ebene der Bremsscheibe 1 und enden dieser zugewandt mit Druckstücken 9, an welchen ein gegen die Bremsscheibe 1 anpreßbarer Bremsbelag 10 anliegt. Wie später erläutert sind die Gewinde der Stellspindeln 7 und 8 gleich- oder gegenläufig auszubilden. Der Bremsbelag 10 ist insbesondere in Umfangsrichtung zur Bremsscheibe 1 an Halterungen 11 quer zur Bremsscheibe 1 verschieblich geführt, die Halterungen 11 können wie üblich dem Bremssattel 2 oder einem Bremsträger zugehören. Die beiden Stellspindeln 7 und 8 weisen ihre Gewinde durchschneidende Axialverzahnungen auf, in welche ein die beiden Stellspindeln 7 und 8 drehfest miteinander koppelnder Zahnriemen 12 eingreift. Der Zahnriemen ist, wie aus Fig.1 ersichtlich, ohne Verwindung, oder, wie später erläutert, zur Drehrichtungsumkehr einmal in sich verwunden zu führen. An der Traverse 6 befinden sich Halteorgane 13 zur Führung des Zahnriemens 12. In Abänderung hierzu ist es auch möglich, wie später zu Fig.3 beschrieben auf den Stellspindeln 7 und 8 in deren Axialverzahnung eingreifende Zahnräder zu lagern, auf welchen der Zahnriemen 12 läuft.

Gemäß Fig.1 sind die beiden Stellspindeln 7 und 8 mit je einem vollständigen Drehantrieb 14 bzw. 14′ versehen, welche sich im wesentlichen in axialen Ausnehmungen der Stellspindeln 7 bzw. 8 befinden. Die beiden Drehantriebe 14 und 14′ können weitgehend gleichartig ausgebildet sein. Bremsscheibenabgewandt ragen die beiden Drehantriebe 14 und 14′ aus den Stellspindeln 7 und 8 heraus, tragen dort je einen radial auskragenden Antriebshebel 15 bzw. 15′ und sind elastisch auslenkbar am Bremssattel 2 gehaltert. Jeder Drehantrieb 14 und 14′ endet mit einem von außen zugänglichen Antriebszapfen 16 bzw. 16′. Die freien Enden der Antriebshebel 15 und 15′ wirken mit jeweils einem Anschlagstift 17 bzw. 17′ zusammen, welche andererseits am Nockenhebel 4 gehaltert sind.

Der Bremssattel 2 ist in üblicher Weise relativ querverschieblich zur Bremsscheibe 1 gelagert und trägt einen nicht dargestellten, gegenüberliegend zum Bremsbelag 10 an die Bremsscheibe 1 anpreßbaren Bremsbelag.

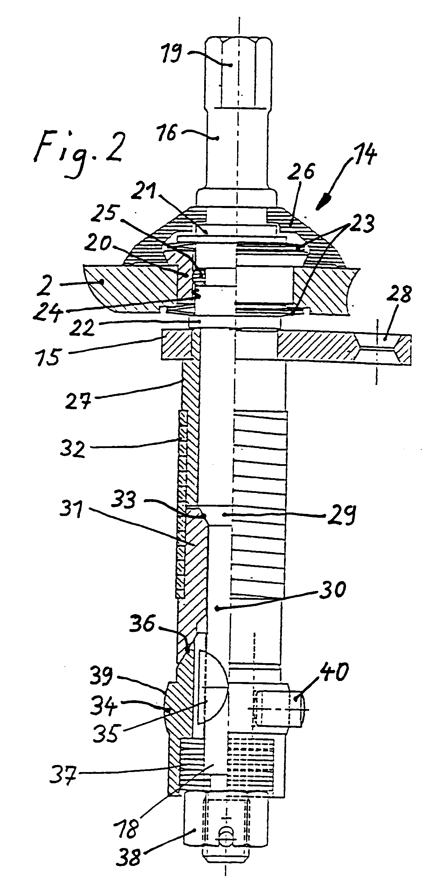

In Fig.2 ist der Drehantrieb 14 für die Stellspindel 7 dargestellt; der Drehantrieb 14′ der Stellspindel 8 ist zumindest weitgehend gleichartig ausgebildet und braucht daher nicht weiter erläutert zu werden.

Gemäß Fig.2 weist der Drehantrieb 14 eine sich über dessen ganze Länge erstreckende Spindel 18 auf, welche einerseits mit dem Antriebszapfen 16 endet, welcher Ansatzflächen 19 für ein nicht dargestelltes Drehwerkzeug, beispielsweise einen Schraubenschlüssel, trägt. Zur kardanisch auslenkbaren Halterung am Bremssattel 2 weist die Spindel 18 im Anschluß an den Antriebszapfen 16 beiderseits einer von ihr mit Spiel durchgriffenen, am Bremssattel 2 gehalterten Buchse 20 je einen Flansch 21 bzw. 22 auf, zwischen welchen und der Buchse 20 bzw. dem Bremssattel 2 Tellerfedern 23 eingespannt sind. Das Spiel der Spindel 18 in der Bohrung 24 der Buchse 20 ist von einem an der Spindel 18 gehalterten Dichtring 25 überbrückt. Eine auf die Spindel 18 aufgeknüpfte und an der Buchse 20 gehalterte Haube 26 aus elastischem Material schützt die Halterung der Spindel 18 vor Verschmutzung. In Anschluß an den bremssattelinneren Flansch 22 ist auf der Spindel 18 eine erste Buchse 27 drehbar gelagert, welche drehfest den Antriebshebel 15 trägt. Der Antriebshebel 15 ist an seinem freien Ende mit einer Bohrung 28 versehen, in welche der in Fig.2 nicht dargestellte Anschlagstift 17 eingreift. Anschließend an die erste Buchse 27 ist auf einem über einen konischen Abschnitt 29 verjüngten Teil 30 der Spindel 18 als zweite Buchse eine Konusbuchse 31 drehbar gelagert. Die beiden mit geringem Abstand voreinander endenden Buchsen 27 und 31 weisen an den einander zugewandten Abschnitten gleichen Außendurchmesser auf und sind an diesen Abschnitten von einer Schlingfeder 32 mit radialer Vorspannung umfaßt. Innenseitig weist die Konusbuchse 31 eine zum Abschnitt 29 adäquate Konusfläche auf und bildet so zusammen mit dieser eine Konuskupplung 33. Anschließend an die Konusbuchse 31 ist auf der Spindel 18 eine Abtriebsbuchse 34 gelagert, welche vermittels einer in fluchtende Nuten der Spindel 18 und der Abtriebsbuchse 34 eingreifenden Scheibenfeder 35 axial verschieblich und undrehbar zur Spindel 18 ist. Die Konusbuchse 31 und Abtriebsbuchse 34 liegen vermittels eine Konuskupplung 36 bildender Konusflächen aneinander an. Anschließend an die Abtriebsbuchse 34 durchsetzt die Spindel 18 eine Vorspannfeder 37, welche zwischen die Abtriebsbuchse 34 und eine justierbar mit der Spindel 18 verschraubte Mutter 38 eingespannt ist; die Vorspannfeder 37 belastet also die beiden Konuskupplungen 36 und 33 in Schließrichtung. Die Abtriebsbuchse 34 trägt außenseitig einen radial geringfügig vorspringenden, balligen Abschnitt 39, mit welchem sie in der Axialbohrung der in Fig.2 nicht dargestellten Stellspindel 7 geführt ist; die Stellspindel 7 überragt auf Seiten der Mutter 38 den Drehantrieb 14 und umfaßt andererseits letzteren bei unverschlissenen Bremsbelägen - wie in Fig.1 gezeigt - bis dicht vor den Antriebshebel 15. In der Axialbohrung der Stellspindel 7 befinden sich aus Fig.3 ersichtliche Längsnuten 44, in welche in die Abtriebsbuchse 34 im Bereich deren Abschnittes 39 eingelassene Radialbolzen 40 verschieblich eingreifen; die Radialbolzen 40 koppeln somit die Abtriebsbuchse 34 undrehbar, aber längsverschieblich mit der Stellspindel 7. Es können zweckmäßig über den Umfang gleichmäßig verteilt mehrere Längsnuten 44 in der Stellspindel 7 und Radialbolzen 40 an der Abtriebsbuchse 34 vorgesehen sein.

Die Schlingfeder 32 wirkt als Einwegdrehkupplung, welche beim Drehen des Antriebshebels 15 in einer Drehrichtung einen Freilauf zwischen der ersten Buchse 27 und der Konusbuchse 31 und bei entgegengesetzter Drehrichtung eine feste Drehverbindung zwischen diesen beiden Buchsen bewirkt. Auf die Konusbuchse 31 wirkende Drehmomente werden einerseits über die Konuskupplung 36 unmittelbar und andererseits über die Konuskupplung 33, die Spindel 18 sowie die Scheibenfeder 35 mittelbar auf die Abtriebsbuchse 34 übertragen, das übertragbare Drehmoment hängt dabei von der Vorspannung der Vorspannfeder 37 ab und ist durch Justieren der Mutter 38 somit einstellbar.

Die Fig.3 zeigt eine mit zwei wie vorstehend beschrieben ausgebildeten Drehantrieben 14 und 14′ ausgestattete Scheibenbremse bei weitgehend verschlissenen Bremsbelägen, zum Erleichtern des Verständnisses sind einige der vorstehend erläuterten Bezugszahlen eingeschrieben. Bei dieser Ausführung sind die Stellspindeln 7 und 8 anstelle einer Axialverzahnung mit Anflächungen 41 bzw. 41′ versehen, auf welchen Zahnräder 42 bzw. 42′ axial verschieblich, aber unverdrehbar geführt sind. Die vermittels Lagerungen 43 bzw. 43′ an der Traverse 6 gelagerten Zahnräder 42 und 42′ sind vermittels des Zahnriemens 12 gekoppelt. Es ist aus Fig.3 ersichtlich, daß die Schlingfedern 32 und 32′ gegensätzlichen Wicklungssinn aufweisen. Unter Berücksichtigung der entgegengesetzten Drehrichtungen der Antriebshebel 15 und 15′ beim Bewegen des Nockenhebels 4 ergibt sich hieraus, daß beide Drehantriebe 14 und 14′ zueinander parallel nur während Einbrems- oder während Lösevorgängen arbeiten. Die entgegengesetzten Drehrichtungen der Drehantriebe 14 und 14′ beim Bewegen des Nockenhebels 4 werden durch eine in Fig.3 nicht dargestellte Verwindung bzw.Verschränkung des Zahnriemens 12 derart, daß jedes Zahnriementrum zwischen den Zahnrädern 42 und 42′ die Zeichenebene durchsetzt und die Zahnräder 42 und 42′ gegenläufig gekoppelt sind, ausgeglichen. Der Zahnriemen 12 kann hierzu vermittels nicht gezeigter, an der Traverse 6 gelagerter Umlenkräder mit beiden Trums vor oder hinter die Zeichenebene der Fig.3 geführt und dort - seitlich des Nockenhebels 4 - verschränkt sein. Außerdem sind die Gewinde der Stellspindeln 7 und 8 gegenläufig auszubilden. In den aufgeschnittenen Stellspindeln 7 und 8 sind die Axialnuten 44 und 44′ ersichtlich, in welche die Radialbolzen 40 bzw. 40′ der beiden Drehantriebe 14 und 14′ eingreifen.

Die vorstehend beschriebenen Drehantriebe 14 und 14′ arbeiten in Verbindung mit der Scheibenbremse wie folgt, wobei von einer Wirksamkeit beider Drehantriebe 14 und 14′ bei Einbremsvorgängen ausgegangen wird; da beide Drehantriebe 14 und 14′ hierbei lediglich mit entgegengesetztem Drehsinn, aber ansonsten gleichartig arbeiten, wird nachfolgend im wesentlichen nur auf Drehantrieb 14 Bezug genommen:

Im Lösezustand der Scheibenbremse weist der Bremsbelag 10 ebenso wie der bezogen auf die Bremsscheibe 1 gegenüberliegende, nicht dargestellte Bremsbelag ein Lüftspiel zur Bremsscheibe 1 auf. Zum Zuspannen der Scheibenbremse ist der Nockenhebel 4 vermittels des Hebels 5 um die Wälzlagerung 3 zu schwenken, wobei die Traverse 6 in Richtung zur Bremsscheibe 1 verschoben wird; die Traverse 6 nimmt dabei die mit ihr verschraubten Stellspindeln 7 und 8 und über die Druckstücke 9 den Bremsbelag 10 mit. Durch geeignete Ausbildung des Nockens des Nockenhebels 4, welcher auf die Traverse 6 einwirkt, ist dabei erreichbar, daß bei der Bewegung des Nockenhebls 4 anfänglich eine geringe, sich mit der Bewegung jedoch auf hohe Werte steigernde Kraftübersetzung zwischen dem Nockenhebel 4 und dem Bremsbelag 10 erfolgt. Infolge seiner Halterung am Bremssattel 2 folgt der Drehantrieb 14 nicht der Axialverschiebung der Stellspindel 7, zwischen beiden erfolgt also eine axiale Relativverschiebung.

Der Nockenhebel 4 nimmt bei seiner Bewegung den Anschlagstift 17 mit, welcher durch seinen Eingriff in die Bohrung 28 den Antriebshebel 15 verdreht. Diese Drehung wird über die erste Buchse 27 und die in dieser Drehrichtung sperrende Schlingfeder 32 auf die Konusbuchse 31 übertragen. Bis zum Anlegen der Reibbeläge 10 an die Bremsscheibe 1 tritt nur geringer Bewegungswiderstand auf, eine Verschraubung zwischen der Traverse 6 und den Stellspindeln 7 und 8 in Bewegungsrichtung letzterer zur Bremsscheibe 1 hin ist daher ebenfalls ohne nennenswerten Bewegungswiderstand möglich, und die Drehbewegung der Konusbuchse 31 kann daher über die Konuskupplung 36 sowie die Konuskupplung 33 und die Scheibenfeder 35 auf die Abtriebsbuchse 34 übertragen werden, welche vermittels ihrer Drehkopplung durch die in die Längsnuten 44 der Stellspindel 7 eingreifenden Radialbolzen 40 die Drehbewegung auf die Stellspindel 7 in deren Verschraubrichtung zur Bremsscheibe 1 hin überträgt. Die Drehbewegung der Stellspindel 7 wird vermittels des verschränkten Zahnriemens 12 mit derjenigen der Stellspindel 8 synchronisiert, welche sich infolgedessen mit entgegengesetzter Drehrichtung und entgegengesetzter Gewindesteigung in gleichem Maße wie die Stellspindel 7 in Richtung zur Bremsscheibe 1 hin relativ zur Traverse 6 verschraubt, wobei diese Verschraubung bereits durch den der Stellspindel 8 zugeordneten, über den Anschlagstift 17′ und den Antriebshebel 15′ in gleicher Weise vom Nockenhebel 4 betätigbaren Drehantrieb 14′ erfolgen kann. Sobald infolge der durch die Bewegung des Nockenhebels 4 bewirkten Verschiebung der Traverse 6 in Verbindung mit der vorstehend erwähnten Relativverschraubung zwischen den Stellspindeln 7 und 8 und der Traverse 6 der Bremsbelag 10 und nach geringer Bewegung des Bremssattels 2 auch der gegenüberliegende Bremsbelag an der Bremsscheibe 1 anliegen bzw. mit noch geringer Kraft angedrückt werden, tritt ein Bewegungswiderstand auf, welcher den weiteren Bremsbelagbewegungen entgegenwirkt und rasch auf hohe Werte steigt; das weitere feste Zuspannen der Scheibenbremse kann nur unter elastischer Verformung ihrer Teile, insbesondere auch des Bremssattels 2 und der Reibbeläge 10 erfolgen. Beim nach dem Anlegen der Bremsbeläge 10 erfolgenden Weiterbewegen des Nockenhebels 4 wird zwar durch den Anschlagstift 17 über den Antreibhebel 15 und die Schlingfeder 32 die Konusbuchse 31 weitergedreht, doch rutschen nun infolge des hohen, sich auch als Verschraubungswiderstand zwischen den Stellspindeln 7 und 8 sowie der Traverse 6 auswirkenden Bewegungswiderstandes die Konuskupplungen 33 und 36 durch, die Abtriebsbuchse 34 erfährt also keine weitere Drehung und es erfolgt keine weitere Relativverschraubung zwischen den Stellspindeln 7 und 8 sowie der Traverse 6 während des Festbremshubes. Es ergibt sich somit, daß eine Relativverschraubung zwischen den Stellspindeln 7 und 8 und der Traverse 6 nur während des Anlegehubes vom Lösezustand bis zum Anliegen der Bremsbeläge erfolgt, das Lösespiel der Scheibenbremse somit unabhängig von deren während nachfolgender Festbremshübe auftretenden, elastischen Verformungen ist.

Beim nachfolgenden Lösen der Scheibenbremse wird der Nockenhebel 4 zurückgeschwenkt, über den Anschlagstift 17 erfolgt daher ein entsprechendes Zurückdrehen des Antreibhebels 15. Dieses Zurückdrehen erfolgt in Entsperrichtung der Schlingfeder 32, so daß es von der ersten Buchse 27 nicht auf die Konusbuchse 31 übertragen wird, letztere mitsamt der Spindel 18 und der Abtriebsbuchse 34 sowie den Stellspindeln 7 und 8 somit keinerlei Drehung erfährt.

Der Drehantrieb 14′ wirkt ebenso wie vorstehend zum Drehantrieb 14 beschrieben, seine Funktionsweise braucht daher nicht weiter erläutert zu werden. Beide Drehantriebe 14 und 14′ wirken also parallel zueinander, über den Zahnriemen 12 wird lediglich eine Synchronisation zum Ausschließen ungleichmäßiger Nachstellvorgänge und damit von Schrägstellungen des Bremsbelages 10 relativ zur Bremsscheibe 1 bewirkt. Hinsichtlich der Nachstellfunktion verdoppelt sich, bezogen auf Scheibenbremsen mit nur einen Drehantrieb, das Nachstellmoment, während die Nachstellgeschwindigkeit unverändert verbleibt.

Sollte einer der beiden Drehantriebe 14 oder 14′ aus irgend einem Grunde ausfallen, beispielsweise durch Bruch oder Lockern des entsprechenden Antriebshebels 15 oder 15′, so bleibt der andere Drehantrieb 14′ bzw. 14 doch voll funktionsfähig und arbeitet in der vorstehend beschriebenen Weise. Über den Zahnriemen 12 wird hierbei der Nachstell- Schraubvorgang von der den intakten Drehantrieb 14′ bzw. 14 aufweisenden Stellspindel 8 bzw. 7 auf die jeweils andere, den defekten Drehantrieb 14 bzw. 14′ aufweisende Stellspindel 7 bzw. 8 übertragen und diese Stellspindel entsprechend mitgedreht, es erfolgt also nach wie vor eine bezogen auf die Länge des Bremsbelages 10 gleichmäßige Nachstellung. Hierdurch wird ein Ausfall der Scheibenbremse bei defektem, einem Drehantrieb 14 bzw. 14′ ausgeschlossen.

In Abänderung zur vorstehend beschriebenen Ausführungsform ist es auch möglich, die beiden Drehantriebe 14 und 14′ derart auszubilden, daß sie nicht während Einbrems-, sondern während Lösevorgängen wirksam sind: Bei ansonsten gleicher Ausbildung kann hierzu beispielsweise die Sperrrichtung der von den Schlingfedern 32 und 32′ gebildeten Einwegdrehkupplungen durch Umkehren des Wicklungssinnes in Verbindung mit einer Umkehrung der Steigung der Gewinde der beiden Stellspindeln 7 und 8 vorgesehen werden.

In Abänderung zur Darstellung nach Fig.3 ist es möglich, die beiden Antriebshebel 15 und 15′ nicht in entgegengesetzten, sondern in gleichen Richtungen auskragend an den Drehantrieben 14 und 14′ anzuordnen; der eine Anschlagstift 17 bzw. 17′ ist entsprechend zu verlagern, im Bremssattel 2 ist ein ausreichender Raum hierzu zu schaffen. Beim Bewegen des Nockenhebels 4 ergeben sich dann gleichgerichtete Drehungen der beiden Drehantriebe 14 und 14′, zum Erzielen der vorstehend beschriebenen Funktionsweise sind gleichgerichtete Schlingfedern 32 und 32′ und gleichläufige Gewinde an den Stellspindeln 7 und 8 vorzusehen und die Verschränkung des Zahnriemens 12 entfällt.

In weiterer Abänderung der vorstehend beschriebenen Scheibenbremse können anstelle der Drehantriebe 14 und 14′ andersartig ausgebildete, beliebige Drehantriebe vorgesehen werden, falls diese nur mit Einwegdrehkupplungen ausgestattet sind, um bei nicht ausschließbaren, ungleichförmigen Nachstellvorgängen ohne übermäßige Beanspruchung der Gleichlaufeinrichtung, also des Zahnriemens 12, einen Ausgleich zu ermöglichen.

In weiterer Abänderung ist es möglich, den einen Drehantrieb 14 bzw. 14′ während Einbrems- und den anderen Drehantrieb 14′ bzw. 14 entgegengesetzt während Lösevorgängen wirksam auszubilden. In Abänderung zum vorstehend beschriebenen Ausführungsbeispiel sind unter Berücksichtigung der entgegengesetzten Drehrichtungen der Antriebshebel 15 und 15′ beim Bewegen des Nockenhebels 4 die beiden Schlingfedern 32 und 32′ mit gleichem Wicklungssinn auszuführen, so daß sie also zwei in gleichen Drehrichtungen sperrende Einwegdrehkupplungen bilden. Weiterhin ist der Zahnriemen 12 in einfacher Weise ohne Verwindung, wie aus Fig.l ersichtlich, zu führen und die Gewinde der beiden Stellspindeln 7 und 8 sind gleichläufig, mit gleicher Steigungsrichtung, auszubilden.

Bei dieser Ausführung ist also der eine Drehantrieb 14 bzw. 14′ während Einbremsvorgängen zum Nachstellen hierbei bereits bestehender, übermäßiger Lösespiele wirksam, er überträgt hierbei über den Zahnriemen 12 die Nachstellvorgänge auf die jeweils andersseitige Stellspindel 8 bzw. 7. Während des nachfolgenden Lösehubes ist der andere Drehantrieb 14′ bzw. 14 wirksam, er stellt hierbei während des vorangegangenen Bremsvorganges aufgetretenen Verschleiß nach, seine Nachstellvorgänge werden ebenfalls durch den Zahnriemen 12 auf die andere Stellspindel 7 bzw. 8 übertragen. Insgesamt ergibt sich somit eine sehr hohe, gegenüber den vorbekannten Anordnungen verdoppelte Nachstellgeschwindigkeit. Als weiterer Vorteil wird hierbei eine gegenseitige Rückdrehsicherung der beiden Drehantriebe 14 und 14′ erreicht: Falls nämlich an den durch die Schlingfedern 32 und 32′ gebildeten Einwegdrehkupplungen der Freilaufwiderstand durch irgenwelche Schäden, beispielsweise Verschmutzung, größer wird als die Hemmwirkung der Stellspindeln 7,8, so wird ein in Freilaufrichtung der jeweiligen Einwegdrehkupplung erfolgendes, unerwünschtes Drückdrehen der jeweiligen Stellspindel 7 bzw. 8 doch dadurch ausgeschlossen, daß hierbei die Einwegdrehkupplung des jeweils anderen Drehantriebes 14,14′ über den Zahnriemen 12 in Sperrichtung belastet wird und dieses unerwünschte Zurückdrehen somit verhindert. Es kann also kein bloßes Vor- und Zurückdrehen der Stellspindeln 7,8 infolge eines die Drehhemmung der Stellspindeln 7,8 übersteigenden Freilaufwiderstandes der Einwegdrehkupplungen auftreten.

Zum Auswechseln verschliessener Reibbeläge 10 ist die Scheibenbremse von Hand zurückzustellen. Hierzu müssen die Stellspindeln 7 und 8 in Sperrichtung der Schlingfeder 32 gedreht werden, was durch Ansetzen eines geeigneten Drehwerkzeuges, beispielsweise Schraubenschlüssels an die Ansatzfläche 19 einer oder beider Drehantriebe 14 und/oder 14′ erfolgen kann. Beim manuellen Drehen der Spindel 18 wird über die Scheibenfeder 35 die Abtriebsbuchse 34 mitgenommen, die beiden Konuskupplungen 33 und 36 rutschen dabei durch, da durch den vom Anschlagstift 17 festgehaltenen Antriebshebel 15 und die Schlingfeder 32 die Konusbuchse 31 am Mitdrehen gehindert ist. Die Stellspindel 7 und durch deren Kupplung vermittels des Zahnriemens 12 auch die Stellspindel 8 werden dabei in Entfernungsrichtung von der Bremsscheibe 1 relativ zur Traverse 6 verschraubt. In Abänderung zu den beschriebenen Ausführungsbeispielen ist es selbstverständlich möglich, nur einen der beiden Drehantriebe 14,14′ mit einem Antriebszapfen 16 oder 16′ mit Ansatzflächen 19 zu versehen.

Eine weitere Abänderung zu den vorstehend beschriebenen Ausführungsbeispielen kann darin bestehen, daß die Stellspindeln 7 und 8 nicht durch einen Zahnriemen 12, sondern vermittels Zwischenzahnräder gekoppelt werden. Hierbei ist in besonders einfacher Weise eine gleichgerichtet oder entgegengesetzt drehende Koppelung der Stellspindeln 7 und 8 erreichbar.

Die erwähnten, einzelnen Ausbildungsvariationen sind auch in anderer Kombination als vorstehend erwähnt verwendbar.

### Kurzfassung:

Die Scheibenbremse mit einem eine Bremsscheibe (1) übergreifenden Bremssattel (2) weist einseitig eine Zuspannvorrichtung auf. Die Zuspannvorrichtung beinhaltet einen Nockenhebel (4), der um eine zur Bremsscheibenebene parallele Achse drehbar ist und mit einer Traverse (6) zusammenwirkt. Die Enden der Traverse (6) sind mit Stellspindeln (7,8) verschraubt, gegen welche sich ein Bremsbelag (10) abstützt. Die beiden Stellspindeln (7 und 8) sind vermittels eines Zahnriemens (12) gekoppelt. In Ausnehmungen der beiden Stellspindeln (7 und 8) ragt jeweils ein Drehantrieb (14 bzw. 14′), welche vom Nockenhebel (4) antreibbar sind und während des Anlege- oder Lösehubes ein Verschrauben der Stellspindeln (7 und 8) in Annäherungsrichtung an die Bremsscheibe (1) bewirken. Über den Zahnriemen (12) wird hierbei eine synchrone Verschraubung beider Stellspindeln (7 und 8) erreicht. Der Drehantrieb (14) beinhaltet eine Einwegdrehkupplung sowie eine Drehmoment-Begrenzungskupplung, wodurch ein Verschrauben der Stellspindeln (7 und 8) während des Festbremshubes und des jeweiligen Rückhubes vermieden wird.

Die Doppelanordnung der Drehantriebe 14 und 14′ ergibt eine Redundanzwirkung, derart, daß bei Ausfall eines Drehantriebes 14 oder 14′ doch die Spielnachstellfunktion erhalten bleibt und die Scheibenbremse nicht bei nachfolgenden Belagverschleiß ausfallen kann.

### Bezugszeichenliste

- 1: Bremsscheibe
- 2: Bremssattel
- 3: Wälzlagerung
- 4: Nockenhebel
- 5: Hebel
- 6: Traverse
- 7: Stellspindel
- 8: Stellspindel
- 9: Druckstück
- 10: Bremsbelag
- 11: Halterung
- 12: Zahnriemen
- 13: Halteorgan
- 14 14′: Drehantrieb
- 15,15′: Antriebshebel
- 16,16′: Antriebszapfen
- 17,17′: Anschlagstift
- 18: Spindel
- 19: Ansatzfläche
- 20: Buchse
- 21: Flansch
- 22: Flansch
- 23: Tellerfeder
- 24: Bohrung
- 25: Dichtring
- 26: Haube
- 27: l. Buchse
- 29: Abschnitt
- 30: Teil
- 31: Konusbuchse
- 32,32′: Schlingfeder
- 33: Konuskupplung
- 34: Abtriebsbuchse
- 35: Scheibenfeder
- 36: Konuskupplung
- 37: Vorspannfeder
- 38: Mutter
- 39: Abschnitt
- 40: Radialbolzen
- 41,41′: Anflächung
- 42,42′: Zahnrad
- 43,43′: Lagerung
- 44,44′: Axialnut

## Patentansprüche

1. Scheibenbremse für Fahrzeuge, insbesondere Straßenfahrzeuge, mit einem eine Bremsscheibe (1) übergreifenden Bremssattel (2), der einseitig eine Zuspannvorrichtung mit einem um eine zur Ebene der Bremsscheibe (1) parallel verlaufende Drehachse schwenkbaren Nockenhebel (4) zum Bewegen einer ebenfalls zur genannten Ebene parallel verlaufenden Traverse (6) in zur genannten Ebene senkrechter Richtung aufweist, wobei jedes Ende der Traverse (6) mit einer Stellspindel (7 und 8) verschraubt ist, gegen deren bremsscheibenseitige Enden sich ein relativ zum Bremssattel (2) quer zur Bremsscheibe (1) verschieblicher Bremsbelag (10) abstützt, wobei die beiden Stellspindeln (7 und 8) durch eine gegebenenfalls als Zahnriemen (12) ausgebildete Gleichlaufeinrichtung drehfest miteinander gekoppelt sind und wobei zum Justieren des Lösespiels ein vom Schwenkhub des Nockenhebels (4) betätigbarer Drehantrieb (14,14′) für die Stellspindeln (7 und 8) vorgesehen ist, welcher eine in Drehrichtung zum Verkleinern des Lösespiels sperrende Einwegdrehkupplung beinhaltet, dadurch gekennzeichnet, daß für jede der beiden Stellspindeln (7 und 8) jeweils ein eigener, ihr zugeordneter und vom Nockenhebel (4) über einen eigenen Schwenkantrieb antreibbarer Drehantrieb (14 und 14′) vorgesehen ist.

2. Scheibenbremse nach Anspruch 1, dadurch gekennzeichnet, daß die beiden Drehantriebe (14 und 14′) im wesentlichen in axialen Ausnehmungen der ihnen zugeordneten Stellspindeln (7) angeordnet sind.

3. Scheibenbremse nach Anspruch 1 oder 2, dadurch gekennzeichnet, daß die beiden Drehantriebe (14 und 14′) zueinander parallel wirkend während Einbremsvorgängen oder während Lösevorgängen nachstellend ausgebildet sind.

4. Scheibenbremse nach Anspruch 1 oder 2, dadurch gekennzeichnet, daß einer der beiden Drehantriebe (14 bzw. 14′) während Einbremsvorgängen und der andere Drehantrieb (14′ bzw. 14) während Lösevorgängen nachstellend ausgebildet ist.

5. Scheinbenbremse nach einem der Ansprüche 1 bis 4, dadurch gekennzeichent, daß die beiden Drehantriebe (14 und 14′) gleichartig ausgebildet sind.

6. Scheibenbremse nach einem der Ansprüche 1 bis 4, dadurch gekennzeichnet, daß die Einwegdrehkupplungen der beiden Drehantriebe (14 und 14′) in entgegengesetzten Drehrichtungen sperrend und die Verschraubungen der Stellspindeln (7 und 8) mit der Traverse (6) mit gegenläufigen Gewinden ausgebildet sind.

7. Scheibenbremse nach Anspruch 5 oder 6, dadurch gekennzeichnet, daß die Gleichlaufeinrichtung die Stellspindeln (7 und 8) mit entgegengesetzter Drehrichtung koppelt.

## Claims

1. Disc brake for vehicles, in particular road vehicles, with a calliper (2) engaging over a brake disc (1), which has on one side a brake application device with a cam lever (4) able to pivot about an axis of rotation, extending parallel to the plane of the brake disc (1), for moving a cross arm (6), also extending parallel to the said plane, in a direction which is perpendicular to the said plane, wherein each end of the cross arm (6) is screwed to an adjusting spindle (7 and 8), against the ends of which, on the side of the brake disc, there is supported a brake lining (10), displaceable relative to the calliper (2) transversely to the brake disc (1), wherein the two adjusting spindles (7 and 8) are coupled together so as to be secure against rotation by means of a synchronizing device, possibly formed as a toothed belt (12), and wherein, for adjusting the release play, a rotary drive (14, 14′) for the adjusting spindles (7 and 8), actuatable by the pivot stroke of the cam lever (4), is provided, which contains a one-way rotary coupling, locking in the direction of rotation for reducing the release play, characterised in that for each of the two adjusting spindles (7 and 8), in each case there is provided an individual rotary drive (14 and 14′) allocated thereto, able to be driven by the cam lever (4), by way of an individual pivoting drive.

2. Disc brake according to claim 1, characterised in that the two rotary drives (14 and 14′) are arranged substantially in axial recesses of the adjusting spindles (7) allocated thereto.

3. Disc brake according to claim 1 or 2, characterised in that the two rotary drives (14 and 14′) are formed to act in parallel relative to each other and to adjust during braking operations or during release operations.

4. Disc brake according to claim 1 or 2, characterised in that one of the two rotary drives (14 or 14′) is formed to adjust during braking operations and the other rotary drive (14′ or 14) during release operations.

5. Disc brake according to one of claims 1 to 4, characterised in that the two rotary drives (14 and 14′) are formed in a similar manner.

6. Disc brake according to one of claims 1 to 4, characterised in that the one-way rotary couplings of the two rotary drives (14 and 14′) are formed to lock in opposing directions of rotation and the screwed connections of the adjusting spindles (7 and 8) with the cross arm (6) are formed with opposing threads.

7. Disc brake according to claim 5 to 6, characterised in that the synchronizing device couples the adjusting spindles (7 and 8) with an opposing direction of rotation.

## Revendications

1. Frein à disque pour véhicules, notamment pour véhicules routiers, comportant un étrier de frein (2) qui s'engage au-dessus d'un disque de frein (1) et qui possède, d'un côté, un dispositif de serrage comportant un levier à came (4) pouvant pivoter autour d'un axe de rotation qui est parallèle au plan du disque de frein (1), pour amener une traverse (6), qui est également parallèle audit plan, dans une direction perpendiculaire à ce plan, les extrémités de la traverse (6) étant raccordées par vissage à des broches respectives de réglage (7 et 8), et dans lequel une garniture de frein (10) déplaçable par rapport à l'étrier de frein (2) transversalement par rapport au disque de frein (1), prend appui contre les extrémités desdites broches, qui sont tournées du côté du disque de frein, et les deux broches de réglage (7 et 8) sont accouplées entre elles avec blocage en rotation au moyen d'un dispositif de synchronisation réalisé éventuellement sous la forme d'une crémaillère (12), et dans lequel pour l'ajustement du jeu de desserrage il est prévu, pour les broches de réglage (7 et 8), un dispositif d'entraînement en rotation (14, 14′), qui peut être actionné par la course de pivotement du levier à came (4) et qui comporte un accouplement rotatif unidirectionnel, qui réalise un blocage dans le sens de rotation visant à réduire le jeu de desserrage, caractérisé par le fait que pour les deux broches de réglage (7 et 8), il est prévu des dispositifs respectifs propres d'entraînement en rotation (14 et 14′), qui leur sont associés et peuvent être entraînés par le levier à came (4), par l'intermédiaire de dispositifs propres d'entraînement basculant.

2. Frein à disque suivant la revendication 1, caractérisé par le fait que les deux dispositifs d'entraînement en rotation (14 et 14′) sont disposés essentiellement dans des logements axiaux des broches de réglage (7) qui leur sont associées.

3. Frein à disque suivant la revendication 1 ou 2, caractérisé par le fait que les deux dispositifs d'entraînement en rotation (14 et 14′) sont agencés de manière à réaliser un rattrapage de jeu en agissant parallèlement entre eux, pendant des opérations de freinage ou pendant des opérations de desserrage.

4. Frein à disque suivant la revendication 1 ou 2, caractérisé par le fait que l'un des deux dispositifs d'entraînement (14 ou 14′) est agencé de manière à réaliser un rattrapage de jeu pendant des opérations de freinage et que l'autre dispositif d'entraînement en rotation (14′ ou 14) est agencé de manière à réaliser un rattrapage de jeu pendant des opérations de desserrage.

5. Frein à disque suivant l'une des revendications 1 à 4, caractérisé par le fait que les deux dispositifs d'entraînement en rotation (14 et 14′) ont des constitutions identiques.

6. Frein à disque suivant l'une des revendications 1 à 4, caractérisé par le fait que les accouplements rotatifs unidirectionnels des deux dispositifs d'entraînement en rotation (14 et 14′) sont réalisés de manière à effectuer un blocage dans des sens de rotation opposés et que les systèmes de vissage des broches de réglage (7 et 8) sur la traverse (6) sont réalisés avec des filetages tournant en des sens opposés.

7. Frein à disque suivant la revendication 5 ou 6, caractérisé par le fait que le dispositif de synchronisation accouple les broches de réglage (7 et 8) à sens de rotation opposés.
